# EUROPEAN PATENT APPLICATION

(11) **EP 1 389 763 A1**
(43) Date of publication of application: **18.02.2004**
(21) Application number: 02017776.2
(22) Date of filing: 12.08.2002
(51) Int. Cl.: G06F 17/30

(54) **Computer based presentation system**

(71) Applicant: SAP Aktiengesellschaft, 69190 Walldorf (DE)
(72) Inventor: Sindambiwe, Eugène, 69214 Eppelheim (DE)

(57) **Abstract**

A computer (900) is adapted to implement an application (200) that processes (430) a data set (300, characters) to a presentation (503). The computer (900) has a controller (101) to receive (410) an activation trigger (105) from a user (1000) and to subsequently cause the application (200) to read (420) the data set (300) from intermediate storage (102). The computer user (1000) can operate a remote control device (940). The controller (101) can cause the application (200) to read (420) the data set (300) from intermediate storage (102) that is implemented by remote memory. Remote memory and control devices communicate with the computer (900) via infra-red or radio links.

## Description

### Field of the Invention

The present invention generally relates to data processing and, more particularly, relates to computers, computer programs, and methods that process data set to provide presentations.

### Background of the Invention

Presenters often use slide shows to visually support oral communication to audiences. The slides are transparency foils for use by optical projectors or electronic image files for use by computer projectors. The presenter is supported by a variety of tools, such as presentation software under control of a remote control device.
Since slides for traditional shows are predefined and fixed, presenters in the computer business tend to present computer applications in real-time. In such cases, the presenter operates an application computer that provides screen or projector presentations. Consecutive presentations are, for example, an input screen that is empty at time point T1, the input screen with keyboard-typed data at time point T2, and an output display with processed data at time point T3. The first period (T12 from T1 to T2) is for receiving data; the second period T23 (from T2 to T3) is for processing data. Judging from the viewpoint of the audience, receiving period T12 should be as short as possible; and processing period T23 should be precise as possible and should include all processing time.
There is an ongoing need to provide computers, methods and programs that provide improved timing for presentations.

### Summary of the Invention

The present invention provides system, method and computer program products for providing presentations. In general, in one aspect, the invention features a computer adapted to implement an application that processes a data set to a presentation. The computer has a controller to receive an activation trigger from a user and to subsequently cause the application to read the data set from intermediate storage.
The invention can be implemented to include one or more of the following advantageous features. The controller can cause the application to read the data set as character set. The controller can be implemented to receive the trigger from a user operating a remote control device. The controller can cause the application to read the data set from intermediate storage that is implemented by remote memory. The remote memory can communicate with the computer via an infra-red link or via a radio link. The controller can be implemented to remove the data set from storage after reading. The controller can be implemented to distinguish triggers from different control devices. The controller can be implemented to receive a selection from a plurality of predefined data sets.

A method for operating a computer with an application (that processes a data set to a presentation) is characterized in that the computer receives an activation trigger from a user and subsequently reads the data set from an intermediate storage. Advantageously, the computer can read the data set as character set; the computer can read the data set from an intermediate storage implemented by remote memory; the computer can receive the activation trigger from a control device that is remote.
Also, the invention relates to a computer program product comprising program instructions for causing a computer to perform the method.

The details of one or more implementations are set forth in the accompanying drawings and the descriptions below. Other features and advantages of the invention will become apparent from the description, the drawings and the claims.

### Brief Description of the Drawings

- FIG. 1: illustrates a simplified overview diagram of a computer system operating according to the present invention; and
- FIGS. 2-4: illustrate exemplary and optional embodiments.

Like reference numbers and designations in the various drawings indicate like elements.

### Detailed Description

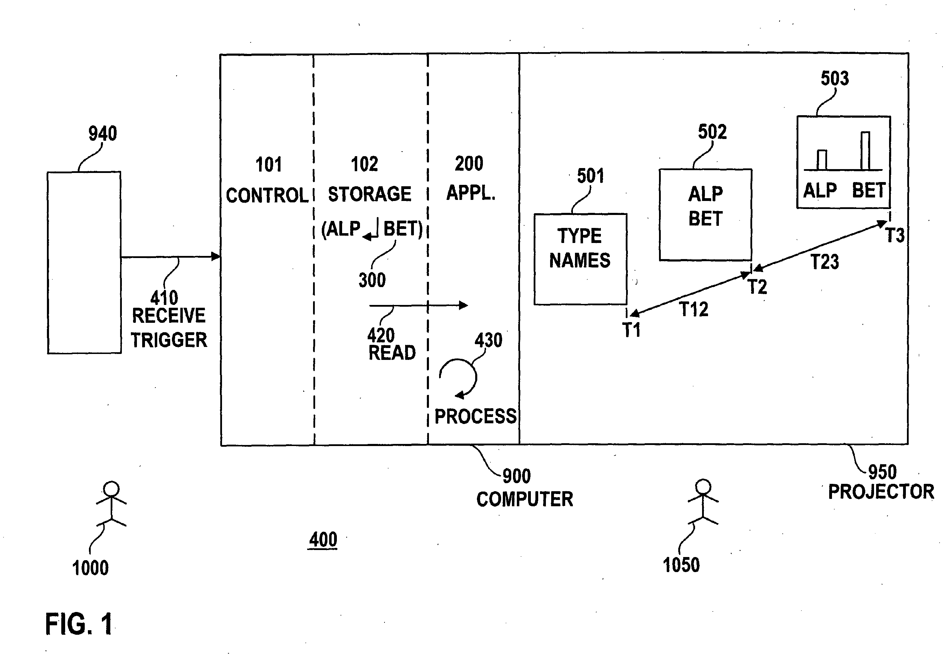

FIG. 1 illustrates a simplified overview diagram of a computer system operating according to the present invention. Illustrated are:
(a) computer 900 with data set 300, application 200, and computer program product (CPP) to implement controller 101 and intermediate storage 102;
(b) screen 950 with views 501/502 and presentation 503,
(c) control device 940 with trigger 105, as well as
(d) human users 1000 and 1050.
Arrows 410-430 symbolize steps of method 400.
For example, computer 900 with application 200 receives company names through input views 501 and 502, accesses a public database (for example, via Internet) and provides bar charts (presentation 503) to visualize employee numbers. Exemplary company names follow abbreviated Greek letters (ALP, BET, GAM, ..., OME).
In short, computer 900 is adapted to implement application 200 that processes (step 430) data set 300 to presentation 503. Controller 101 is provided to receive (step 410) activation trigger 105 from user 1000 and to subsequently cause application 200 to read (step 420) data set 300 from storage 102. Method 400 is a method for operating computer 900 with application 200 that processes (step 430) data set 300 to presentation 503 with prior steps receiving 410 and reading 420.
Computer 900 is a general-purpose computer with memory (RAM, ROM), processor, data carrier (CD-ROM or floppy drive) and I/O ports. Computer 900 can be portable (lap-top) or stationary (desktop); it can operate in stand-alone mode or in cooperation with other computers via Internet or similar networks.

Screen 950 is any display (e.g. LCD, CRT) or projector that visualizes data to users 1000/1050. Views 501/502 and presentation 503 on screen 950 are illustrated together with a time axis having time points T1, T2 and T3 and periods T12 and T23. Application 200 receives data set 300 (for example, user interaction through 501/502) and processes (step 430) data set 300 to presentation 503. Screen 950 consecutively displays, for example, input view 501 that is substantially empty at time point T1 (e.g., only inviting to "TYPE NAMES"), input view 502 with data set 300 (e.g., set (ALP, BET)) at time point T2, and presentation 503 with processed data (e.g., bar chart) at time point T3.
Control device 940 is any user-operated device suitable to forward trigger 105 to controller 101, such as a remote control unit with radio or infra-red link to computer 900, a keyboard or a mouse/trackball (wireless or cable).
First user 1000 is the person that operates computer 900 (e.g., a presenter in a computer business seminar), and second user 1050 is the person that watches screen 950 (e.g., audience with at least one participant). Users 1000 and 1050 could be the same person.
Input data set 300 is a predefined data set, for example (in one embodiment) a character set (ALP 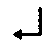 BET 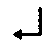 ; 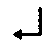 "carriage return" symbol).

In terms of the above-mentioned periods, the embodiment of FIG. 1 is now compared to the above-mentioned prior art:
Receiving period T12 (from T1 to T2) is minimized. Since data set 300 is pre-recorded, T12 is only the time technically required to read set 300 (in step 420). From the viewpoint of users 1000/1050, T12 can be neglected. Views 501 and 502 appear to the audience as if both views would be predefined slides. The presenter (i.e. user 1000) is relieved from typing characters (usually during T12) into a keyboard; since his/her presence near a keyboard is not required, he/she can better communicate with the audience (i.e. user 1050) and even could walk around (with device 940 in the hand).
Processing period T23 (from T2 to T3) is precise. Even for long T23 (e.g., application displays hour glass to symbolize waiting), the audience gets an authentic picture of application 200.

The following describes optional features and embodiments:
Optionally, controller 101 causes application 200 to read (step 420) data set 300 as character set (ALP 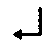 BET 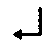 ). Concerning the format, data set 300 hereby corresponds to a usual sequence that user 1000 usually types into a keyboard. Optionally, reading is organized such that user 1000 can input data at any time via keyboard.
Optionally, controller 101 receives (step 410) trigger 105 from a user operating control device 940 being a remote device. In this case, device 940 has a sender and computer 900 has a receiver. Sender and receiver are commercially available. For example, an infra-red (IR)-receiver is plugged into a standard computer port (e.g. COM) to communicate with a handheld IR unit (e.g., a unit that is sold with TV-sets).

The physical location of storage 102 is not important. Hence, storage 102 can also be located outside computer 900. In that case, controller 101 causes application 200 to read data set 300 from storage 102 that is implemented by remote memory as well. The remote memory communicates with computer 900 via an IR link, via radio link or even via Internet. Both device 940 and remote memory can be combined into one unit so that receiving 410 the trigger and reading 420 data set 300 is accomplished simultaneously over the same communication link. Optionally, controller 101 is implemented to remove data set 300 from storage 102 after reading 420, for example, in a first-in-first-out (FIFO) configuration.
Optionally, controller 101 is implemented to distinguish triggers from different control devices (940, 941). Optionally, controller 101 is implemented to receive a selection from a plurality of predefined data sets (A, B).

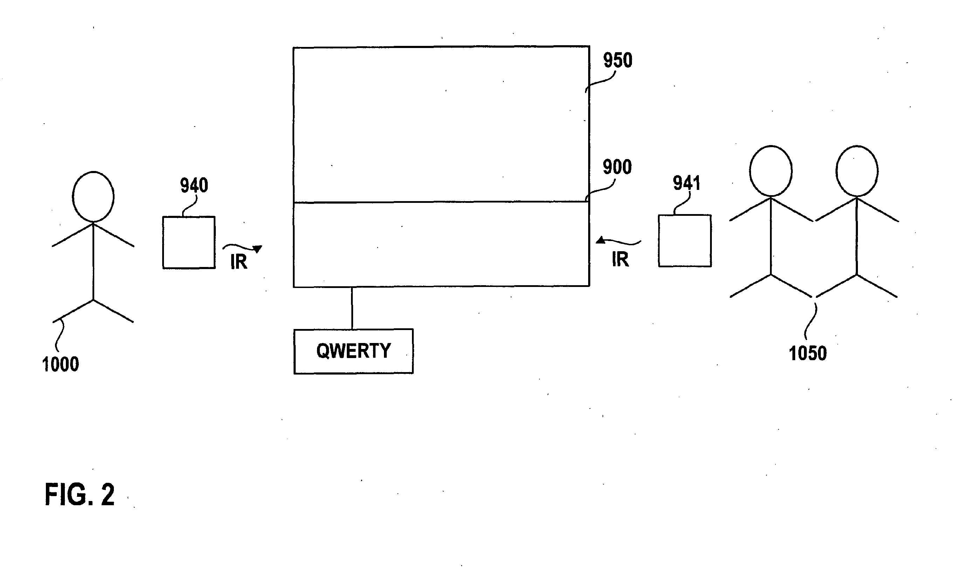

Staying with the example of a presenter (user 1000) who explains application 200 to an audience (user 1050) during the seminar, exemplary and optional embodiments are illustrated by FIGS. 2-4.

As in FIG. 2, the presenter (user 1000) operates control device 940 (IR remote control) for computer 900. He/she is free to walk within the IR communication range (usually a few meters). Optionally, the presenter uses a cable-coupled keyboard (e.g. QWERTY) to input further data sets. Such alternative input is convenient; a presenter (user 1000) can consider suggestions from the audience. One or more persons of the audience (user 1050) operate one or more further IR control devices 941. Code to identify specific data sets or persons is convenient. Members of the audience can forward device 941 to each other. Even separate data sets from different persons can be considered.

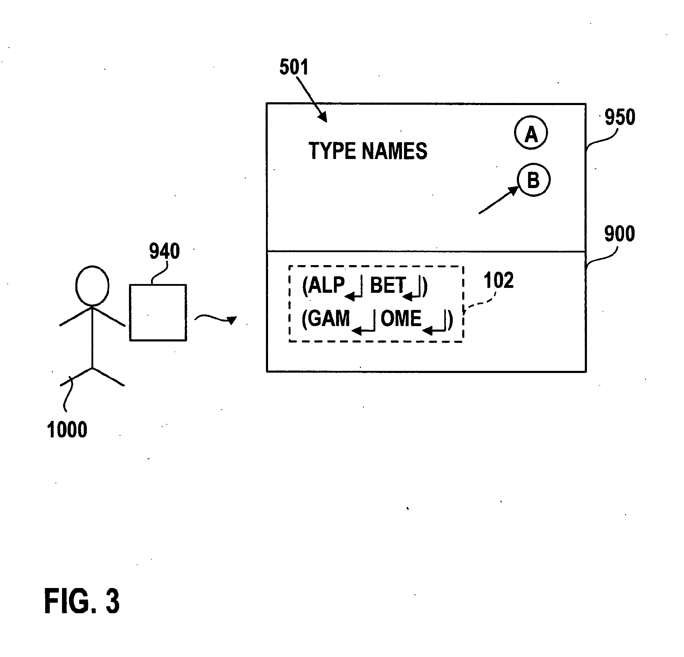

As in FIG. 3 with view 501 ("TYPE NAMES"), the presenter (user 1000) operates control device 940 (pointing device like mouse or trackball) to select a data set from pre-stored sets A and B. Icons (illustrated as circles) symbolize these sets. The presenter is selecting set B (cf. pointer symbol). Preferably, controller 101 provides the icons independently from application 200. Such an approach is convenient for seminar situations where the presenter asks the audience for a suitable selection. The approach of choosing from pre-stored sets is also convenient when device 940 is a standard IR unit with tv-program keys from 1 to 10.

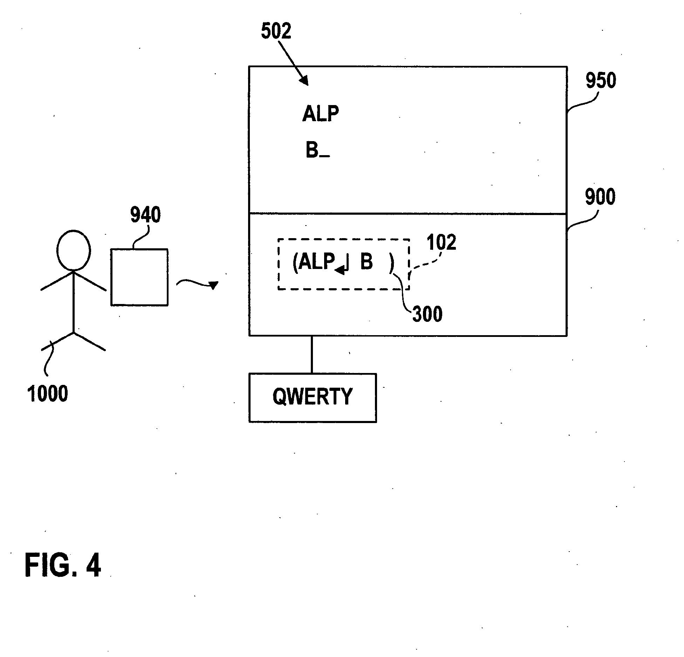

As in FIG. 4, user 1000 operates a keyboard (QWERTY) to input data set 300 into storage 102. User 1000 is assisted by view 502. User 1000 has just completed to input (ALP 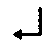 B). Storing data set 300 is convenient in preparing the seminar; however, user 1000 can operate the keyboard at any time during the seminar.

The present invention has been described in FIGS. 1-4 in terms of system and method. The computer program 101/102 as described above can be (a) embodied on a record medium (e.g., a hard disk, CD-ROM, DVD), (b) stored in a computer memory (e.g., RAM, ROM, EPROM, processor registers, ) or (c) carried on an electrical signal.
Computer 900 has central processing unit (CPU) and memory to temporarily or permanently store CPP 101/102. CPP 101/102 has program instructions and that cause the processor to execute the method steps of the present invention. For example and without the intention to be limiting, CPP 101/102 can be available as source code in any programming language, and as object code ("binary code") in a compiled form.

### References

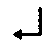 return symbol
1000 first user
101 controller
101/102 CPP
102 storage
105 trigger
1050 second user
200 application
300 data set
400 method
410 receiving activation trigger
420 reading data set
430 processing data set
501, 502 input views
503 presentation
900 computer
940 control device
941 further control device
950 screen
ALP 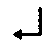 BET 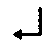 exemplary data set
T12 period between T1 and T2
T23 period between T2 and T3

## Claims

1. A computer (900) adapted to implement an application (200) that processes (430) a data set (300) to a presentation (503), the computer (900) **characterized by** a controller (101) to receive (410) an activation trigger (105) from a user (1000) and to subsequently cause the application (200) to read (420) the data set (300) from intermediate storage (102).

2. The computer (900) of claim 1, wherein the controller (101) causes the application (200) to read (420) the data set (300) as character set (ALP 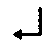 BET 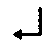 ).

3. The computer (900) of claim 1, wherein the controller (101) is implemented to receive (410) the trigger (105) from a user operating a remote control device (940).

4. The computer (900) of claim 1, wherein the controller (101) causes the application (200) to read (420) the data set (300) from intermediate storage (102) that is implemented by remote memory.

5. The computer (900) of claim 4, wherein the remote memory communicates with the computer (900) via an infra-red link or via a radio link.

6. The computer (900) of claim 1, wherein the controller (101) is implemented to remove the data set (300) from storage (102) after reading (420).

7. The computer (900) of claim 1, wherein the controller (101) is implemented to distinguish triggers from different control devices (940, 941).

8. The computer (900) of claim 1, wherein the controller (101) is implemented to receive a selection from a plurality of predefined data sets (A, B).

9. A method (400) for operating a computer (900) with an application (200), wherein the application (200) processes (430) a data set (300) to a presentation (503), the method (400) **characterized in that** the computer (900) receives (410) an activation trigger (105) from a user (1000) and subsequently reads (420) the data set (300) from an intermediate storage (102).

10. The method (400) of claim 9, wherein the computer (900) reads (420) the data set (300) as character set (ALP 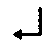 BET 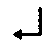 ).

11. The method (400) of claim 9, wherein the computer (900) reads (420) the data set (300) from an intermediate storage (102) that is implemented by remote memory.

12. The method (400) of claim 9, wherein the computer (900) receives (410) the activation trigger (105) from an control device (940) that is remote.

13. A computer program product (101/102) comprising program instructions for causing a computer to perform the method of any claims 9-12.

14. A computer program (101/102) comprising program instructions which, when loaded into a computer (900), constitute the processing means of any of claims 9-12.
